# DEMANDE DE BREVET EUROPEEN

(11) **EP 3 034 939 A1**
(43) Date de publication de la demande: **22.06.2016**
(21) Numéro de dépôt: 15198046.3
(22) Date de dépôt: 04.12.2015
(51) Int. Cl.: F22B 37/00, G21C 17/013, G21C 19/20, G21C 17/007

(54) **PROCÉDÉ ET DISPOSITIF D'INSPECTION D'UN GÉNÉRATEUR DE VAPEUR**

(30) Priorité: 19.12.2014 FR 1462962
(71) Demandeur: SRA Savac, 69516 Vaulx En Velin (FR)
(72) Inventeur: MANDIER, Jean-Paul, 38300 DOMARIN (FR)
(74) Mandataire: Verriest, Philippe

(57) **Abrégé**

Ce procédé d'inspection comprend les étapes suivantes consistant à fournir un dispositif d'inspection (3) s'étendant selon une direction d'extension et comprenant une partie de transport (11) comprenant des moyens de roulement configurés pour rouler sur l'enveloppe interne (6), et des moyens de maintien configurés pour maintenir les moyens de roulement en contact avec l'enveloppe interne (6) lors des déplacements du dispositif d'inspection (3) sur l'enveloppe interne (6), et une partie d'inspection (12) comportant au moins une caméra d'inspection, la partie d'inspection (12) étant montée pivotante par rapport à la partie de transport (11) autour d'au moins un axe de pivotement (s'étendant transversalement à la direction d'extension, à positionner la partie de transport (11) du dispositif d'inspection sur une surface externe de l'enveloppe interne (6), à déplacer le dispositif d'inspection (3) sur au moins une portion du pourtour de l'enveloppe interne (6), et à réaliser une inspection de la plaque de support (8) au moyen de l'au moins une caméra d'inspection.

## Description

La présente invention concerne un procédé et un dispositif d'inspection d'un générateur de vapeur équipant par exemple une centrale thermique notamment du type nucléaire.

Un générateur de vapeur équipant une centrale thermique, et plus particulièrement une centrale nucléaire, comporte généralement d'une part une partie formant échangeur de chaleur comprenant un circuit primaire dans lequel circule de l'eau chaude à très haute pression provenant d'un réacteur, et un circuit secondaire dans lequel l'eau est portée à ébullition, et d'autre part une partie appelée séparateur à cyclones permettant la surgénération de vapeur. La vapeur ainsi formée s'échappe alors du générateur de vapeur et est utilisée pour faire tourner des turbines couplées à un alternateur.

La partie formant échangeur de chaleur d'un générateur de vapeur comporte notamment une enceinte globalement cylindrique formée par une enveloppe externe, appelée virole, munie, en partie basse, de deux ouvertures de diamètre inférieur à 40 cm et diamétralement opposées, dites trous de poing. La partie formant échangeur de chaleur comporte en outre une enveloppe interne, appelée jupe ou encore enveloppe de faisceau, et un faisceau de tubes d'écoulement disposés dans le volume délimité par l'enveloppe interne, et présentant une forme générale de U inversé. Les tubes d'écoulement sont destinés à la circulation de l'eau du circuit primaire, et à échanger de la chaleur avec l'eau du circuit secondaire se trouvant à l'intérieur de l'enveloppe interne. Ces tubes d'écoulement sont montés, en partie basse, sur une plaque de support, appelée plaque tubulaire, et traversent des plaques entretoises espacées régulièrement les unes des autres et parallèles entre elles. Les plaques entretoises comportent, pour le passage des tubes d'écoulement, des ouvertures de passage, chaque ouverture de passage formant des zones de contact avec un tube d'écoulement respectif pour assurer la tenue de celui-ci et délimitant des zones de passage pour l'eau ou la vapeur du circuit secondaire, suivant la position de la plaque entretoise correspondante.

Lors du fonctionnement d'un générateur de vapeur, l'eau présente dans l'enceinte du générateur est portée à haute température et à haute pression dans le but de générer de la vapeur. Les tubes d'écoulement et les autres parties métalliques du générateur de vapeur sont alors soumis à des conditions extrêmes qui occasionnent une corrosion inévitable. Sans intervention, des dépôts liés à cette corrosion s'accumulent sur la plaque tubulaire et les plaques entretoises, et peuvent notamment colmater, au moins partiellement, les zones de passage précitées, ce qui nuit au rendement du générateur de vapeur, mais également à la sûreté du fonctionnement de ce dernier si le taux de colmatage atteint une valeur élevée. Pour cette raison, ce type d'installation doit être régulièrement inspectée et nettoyée de ces dépôts. Cette inspection et ce nettoyage se font généralement au moyen de lances équipées soit d'une caméra d'inspection soit de jets d'eau à haute pression.

Pour atteindre des endroits précis du générateur de vapeur, il est commun d'utiliser, pour guider ces lances au travers des ouvertures exiguës que sont les trous de poing, un ensemble d'inspection et de nettoyage, tel que décrit dans le document FR2961003.

L'ensemble d'inspection et de nettoyage décrit dans le document FR2961003 comprend une lance de nettoyage et/ou d'inspection flexible, et un dispositif de guidage de la lance flexible. Le dispositif de guidage comporte plus particulièrement un système d'entrainement et de guidage de la lance flexible et des moyens de maintien et de déplacement sur la face intérieure d'une paroi cylindrique délimitant l'enceinte d'un générateur de vapeur. Les moyens de maintien et de déplacement comportent deux roues motorisées indépendamment l'une de l'autre et équipées d'éléments en aimant permanent, les deux roues motorisées présentant des axes de rotation parallèles et décalés l'un par rapport à l'autre.

Bien qu'un tel ensemble d'inspection et de nettoyage permette un déploiement de la lance de nettoyage et/ou d'inspection flexible dans toutes les zones de l'enceinte à inspecter ou nettoyer, l'insertion de la lance de nettoyage et/ou d'inspection entre deux rangées prédéterminées de tubes d'écoulement peut s'avérer malaisée dans certaines conditions d'utilisation.

En outre, la vérification de l'état de propreté de la plaque de support au niveau des portions d'extrémité des tubes d'écoulement disposés en périphérie du faisceau de tubes d'écoulement, et à l'aide d'un tel ensemble d'inspection et de nettoyage, peut également s'avérer complexe dans certaines conditions d'utilisation. Il en découle alors généralement un prolongement de l'étape de nettoyage de la plaque de support pour s'assurer de son nettoyage optimal, et donc une augmentation des coûts de nettoyage de la plaque de support.

La présente invention vise à remédier à ces inconvénients.

Le problème technique à la base de l'invention consiste donc à fournir un dispositif et un procédé d'inspection d'un générateur de vapeur permettant une inspection efficace, aisée et rapide d'une plaque de support d'un générateur de vapeur, notamment par exemple lors des opérations de nettoyage de la plaque de support.

A cet effet, la présente invention concerne un procédé d'inspection d'un générateur de vapeur comprenant une enveloppe externe, une enveloppe interne, un faisceau de tubes d'écoulement disposé dans un volume interne délimité par l'enveloppe interne et une plaque de support sur laquelle sont fixées des portions d'extrémité des tubes d'écoulement, le procédé d'inspection comprenant les étapes suivantes consistant à :
- fournir un dispositif d'inspection s'étendant selon une direction d'extension et comprenant :
   - une partie de transport comprenant des moyens de roulement configurés pour rouler sur l'enveloppe interne, et des moyens de maintien configurés pour maintenir les moyens de roulement en contact avec l'enveloppe interne lors des déplacements du dispositif d'inspection sur l'enveloppe interne, et
   - une partie d'inspection comportant au moins une caméra d'inspection et une portion de détection équipée d'au moins un élément de détection, la partie d'inspection étant montée pivotante par rapport à la partie de transport autour d'au moins un axe de pivotement s'étendant transversalement, et par exemple sensiblement perpendiculairement, à la direction d'extension,
- positionner la partie de transport du dispositif d'inspection sur une surface externe de l'enveloppe interne,
- déplacer le dispositif d'inspection sur au moins une portion du pourtour de l'enveloppe interne,
- réaliser une inspection de la plaque de support au moyen de l'au moins une caméra d'inspection,
- détecter, au moyen de l'au moins un élément de détection, la présence de l'enveloppe interne à proximité de la portion de détection, et
- avertir un opérateur lorsque la présence de l'enveloppe interne n'est pas détectée lors de l'étape de détection.

Un tel positionnement du dispositif d'inspection sur l'enveloppe interne du générateur de vapeur permet d'amener de manière aisée le dispositif d'inspection verticalement à proximité des portions d'extrémité des tubes d'écoulement disposés en périphérie du faisceau de tubes d'écoulement, et donc d'inspecter de manière fiable et aisée l'état de propreté de la plaque de support au niveau de ces portions d'extrémité. Ces dispositions permettent ainsi d'assurer une inspection efficace et aisée de la plaque de support, notamment au niveau de la périphérie du faisceau de tubes d'écoulement.

En outre, un tel positionnement du dispositif d'inspection permet d'assurer un nettoyage optimal de la plaque de support, tout en réduisant les coûts de nettoyage de cette dernière.

Un tel positionnement du dispositif d'inspection sur l'enveloppe interne permet également de vérifier l'état de propreté du fluide de nettoyage utilisé lors des opérations de nettoyage de la plaque de support et s'écoulant dans le ru d'eau périphérique, et éventuellement de commander l'arrêt du nettoyage de la plaque de support en fonction de l'état de propreté du fluide de nettoyage.

De plus, la présence d'un tel élément de détection sur le dispositif d'inspection permet notamment d'avertir un opérateur lorsque la portion de détection s'éloigne du bord inférieur de l'enveloppe interne, et donc d'éviter tout risque de chute du dispositif d'inspection depuis l'enveloppe interne.

Selon un mode de mise en oeuvre du procédé d'inspection, l'étape d'inspection de la plaque de support consiste à inspecter la plaque de support au moins au niveau des portions d'extrémité des tubes d'écoulement disposés en périphérie du faisceau de tubes d'écoulement.

Selon un mode de mise en oeuvre du procédé d'inspection, ce dernier comprend une étape consistant à nettoyer la plaque de support, par exemple au moyen d'un dispositif de nettoyage pourvu d'une lance de nettoyage.

Selon un mode de mise en oeuvre du procédé d'inspection, l'étape d'inspection de la plaque de support comprend une étape consistant à inspecter un ru d'eau périphérique, délimité par la plaque de support, l'enveloppe externe et les portions d'extrémité des tubes d'écoulement disposés en périphérie du faisceau de tubes d'écoulement.

Selon un mode de mise en oeuvre du procédé d'inspection, l'étape d'inspection du ru d'eau périphérique est réalisée lors de l'étape de nettoyage de la plaque de support. L'étape d'inspection du ru d'eau périphérique est ainsi avantageusement réalisée simultanément à l'étape de nettoyage.

Selon un mode de mise en oeuvre du procédé d'inspection, l'étape de nettoyage est réalisée au moyen d'un dispositif de nettoyage pourvu d'une lance de nettoyage, tel qu'un dispositif de nettoyage décrit dans le document FR2961003. Lors de l'utilisation d'un tel dispositif de nettoyage, les déplacements de la lance de nettoyage au niveau des portions d'extrémité des tubes d'écoulement disposés en périphérie du faisceau de tubes d'écoulement peuvent être inspectés à l'aide du dispositif d'inspection, ce qui permet de vérifier l'insertion correcte de la lance de nettoyage entre deux rangées prédéterminées de tubes d'écoulement.

Selon un autre mode de mise en oeuvre du procédé d'inspection, l'étape de nettoyage est réalisée au moyen d'un dispositif de nettoyage comportant :
- un rail de support destiné à être inséré, par une ouverture de l'enceinte du générateur de vapeur, selon une direction d'insertion sensiblement horizontale entre deux rangées de tubes d'écoulement,
- des moyens de guidage et de maintien destinés à être fixés au niveau de ladite ouverture de l'enceinte et agencés pour guider et maintenir le rail de support suivant la direction d'insertion,
- un chariot monté mobile sur le rail de support et muni d'une tête orientable,
- une lance de nettoyage flexible comportant une première portion d'extrémité montée sur la tête orientable du chariot, et une deuxième portion d'extrémité destinée à faire saillie à l'extérieur du générateur de vapeur et à être reliée à une source de fluide haute pression,
- des moyens de balayage agencés pour déplacer la tête orientable du chariot selon au moins une première direction transversale à la direction d'insertion, et
- des moyens de déplacement en translation agencés pour déplacer en translation le chariot le long du rail de support.

Selon un mode de mise en oeuvre du procédé d'inspection, ce dernier comprend une étape consistant à introduire le dispositif d'inspection dans le générateur de vapeur par une ouverture prévue sur l'enveloppe externe, telle qu'un trou de poing.

Selon un mode de mise en oeuvre du procédé d'inspection, l'étape de positionnement consiste à positionner la partie de transport du dispositif d'inspection sur la surface externe de l'enveloppe interne de telle sorte que la direction d'extension du dispositif d'inspection soit sensiblement verticale.

Selon un mode de mise en oeuvre du procédé d'inspection, l'étape de détection consiste à détecter, au moyen de l'au moins un élément de détection, la présence de l'enveloppe interne en regard de la portion de détection, et l'étape d'avertissement consiste à avertir l'opérateur lorsque la présence de l'enveloppe interne n'est pas détectée lors de l'étape de détection.

Selon un mode de mise en oeuvre du procédé d'inspection, l'étape de détection consiste à détecter, au moyen de l'au moins un élément de détection, un contact entre la portion de détection et l'enveloppe interne, et l'étape d'avertissement consiste à avertir l'opérateur lorsque qu'aucun contact n'est détecté entre la portion de détection et l'enveloppe interne lors de l'étape de détection.

Selon un mode de mise en oeuvre du procédé d'inspection, l'étape de déplacement consiste à déplacer le dispositif d'inspection dans une partie inférieure de l'enveloppe interne et sur au moins une portion du pourtour de l'enveloppe interne.

La présente invention concerne en outre un dispositif d'inspection d'un générateur de vapeur, adapté pour la mise en oeuvre d'un procédé d'inspection selon l'invention, le dispositif d'inspection s'étendant selon une direction d'extension et comportant :
- une partie de transport comprenant des moyens de roulement configurés pour rouler sur l'enveloppe interne du générateur de vapeur, et des moyens de maintien configurés pour maintenir les moyens de roulement en contact avec l'enveloppe interne lors des déplacements du dispositif d'inspection sur l'enveloppe interne, et
- une partie d'inspection comportant au moins une caméra d'inspection et une portion de détection équipée d'au moins un élément de détection configuré pour détecter, en conditions d'utilisation, la présence de l'enveloppe interne à proximité de la portion de détection, la partie d'inspection étant montée pivotante par rapport à la partie de transport autour d'au moins un axe de pivotement s'étendant transversalement à la direction d'extension.

Une telle configuration de la partie d'inspection, et notamment la présence d'un tel élément de détection, permet notamment d'avertir un opérateur lorsque la portion de détection s'éloigne du bord inférieur de l'enveloppe interne, et donc d'éviter tout risque de chute du dispositif d'inspection depuis l'enveloppe interne.

Selon un mode de réalisation de l'invention, l'au moins un élément de détection est un capteur inductif ou capacitif.

Selon un mode de réalisation de l'invention, l'au moins un élément de détection est configuré pour détecter, en conditions d'utilisation, la présence de l'enveloppe interne en regard de la portion de détection.

Selon un mode de réalisation de l'invention, l'au moins un élément de détection est configuré pour détecter, en conditions d'utilisation, un contact entre la portion de détection et l'enveloppe interne.

Selon un mode de réalisation de l'invention, le dispositif d'inspection comprend en outre une partie de liaison destinée à être reliée à un dispositif de commande et d'alimentation électrique.

Selon un mode de réalisation de l'invention, la partie de liaison comprend un câble d'alimentation électrique et de commande flexible destiné à être relié au dispositif de commande et d'alimentation électrique.

Selon un mode de réalisation de l'invention, le câble d'alimentation électrique et de commande est configuré pour alimenter pneumatiquement le dispositif d'inspection de manière à mettre en surpression l'espace intérieur du dispositif d'inspection, et notamment de la partie d'inspection. Ces dispositions permettent d'éviter, lors de l'utilisation du dispositif d'inspection, de polluer l'espace intérieur du dispositif d'inspection avec un fluide présent dans le générateur de vapeur. Des orifices de fuite peuvent éventuellement être prévus à proximité de la ou des différentes caméras d'inspection équipant le dispositif d'inspection afin de protéger leur objectif par un jet d'air.

Selon un mode de réalisation de l'invention, la partie de liaison est disposée entre la partie de transport et la partie d'inspection.

Selon un mode de réalisation de l'invention, la partie de liaison est montée pivotante sur la partie de transport autour d'un premier axe de pivotement s'étendant transversalement à la direction d'extension du dispositif d'inspection, et la partie d'inspection est montée pivotante sur la partie de liaison autour d'un deuxième axe de pivotement s'étendant transversalement à la direction d'extension du dispositif d'inspection.

Selon un mode de réalisation de l'invention, les moyens de maintien comportent des éléments magnétiques, tels que des éléments en aimant permanent, configurés pour coopérer par aimantation avec l'enveloppe interne.

Selon un mode de réalisation de l'invention les moyens de roulement comportent au moins deux roues motrices montées sur la partie de transport et d'axes de rotation sensiblement parallèles et décalés l'un par rapport à l'autre. Un tel décalage des axes des roues motrices du dispositif d'inspection permet le passage d'obstacles, tels que des soudures verticales, présents sur la surface externe de l'enveloppe interne. En effet, lors d'une telle rencontre, une seule de ces deux roues motrices sera bloquée.

Selon un mode de réalisation de l'invention, les axes de rotation des roues motrices sont sensiblement parallèles à la direction d'extension du dispositif d'inspection.

Selon un mode de réalisation de l'invention, les moyens de roulement comporte un système d'entraînement configuré pour entraîner en rotation les deux roues motrices indépendamment l'une de l'autre. Le système d'entraînement comporte par exemple deux mécanismes d'entraînement en rotation configurés pour entraîner en rotation respectivement les deux roues motrices. Une telle motorisation indépendante des deux roues motrices permet de contrôler aisément la direction de déplacement du dispositif d'inspection sur l'enveloppe interne. De plus, une telle configuration des moyens de roulement permet au dispositif d'inspection d'accéder à tout le pourtour extérieur de l'enveloppe interne, et donc d'assurer une inspection de l'intégralité du ru d'eau périphérique.

Selon un mode de réalisation de l'invention, chaque roue motrice est équipée d'au moins un élément magnétique.

Selon un mode de réalisation de l'invention, le dispositif d'inspection comporte des moyens de contrôle configurés pour contrôler le positionnement du dispositif d'inspection.

Selon un mode de réalisation de l'invention, les moyens de contrôle comportent au moins un inclinomètre configuré pour contrôler la verticalité du dispositif d'inspection lors de ses déplacements sur l'enveloppe interne.

Selon un mode de réalisation de l'invention, l'au moins une caméra d'inspection comporte un capteur optique ayant un axe optique orienté d'un angle compris entre 35 et 55°, et par exemple d'environ 45°, par rapport à la direction d'extension du dispositif d'inspection.

Selon un mode de réalisation de l'invention, la partie d'inspection comprend deux caméras d'inspection disposées de part et d'autre d'un plan longitudinal médian du dispositif d'inspection, chaque caméra d'inspection comportant un capteur optique ayant un axe optique orienté d'un angle compris entre 35 et 55°, et par exemple d'environ 45°, par rapport à la direction d'extension du dispositif d'inspection.

Selon un autre mode de réalisation de l'invention, l'au moins une caméra d'inspection est orientable, et le dispositif d'inspection comporte un système de contrôle configuré pour contrôler l'orientation de l'au moins une caméra d'inspection.

Selon un mode de réalisation de l'invention, le dispositif d'inspection est configuré pour être inséré dans le générateur de vapeur par une ouverture prévue dans une enveloppe externe du générateur de vapeur.

Selon un mode de réalisation de l'invention, la partie d'inspection comprend au moins un système d'éclairage associé à l'au moins une caméra d'inspection.

Selon un mode de réalisation de l'invention, le dispositif de commande et d'alimentation électrique comprend une unité de commande configurée pour commander les mécanismes d'entraînement en rotation selon un mode de fonctionnement automatique et un mode de fonctionnement manuel. Avantageusement, l'unité de commande est configurée pour interdire une commande des mécanismes d'entraînement en rotation selon le mode de fonctionnement automatique lorsque, en conditions d'utilisation, la présence de l'enveloppe interne n'est pas détectée par l'au moins un élément de détection.

Dans le mode de fonctionnement automatique, la commande des mécanismes d'entraînement en rotation est avantageusement réalisée en fonction des mesures de l'inclinomètre, et notamment de manière à conserver le zéro de l'inclinomètre lors du déplacement du dispositif d'inspection. Ces dispositions permettent d'éviter tout risque de décrochement du dispositif d'inspection de l'enveloppe interne.

Selon un mode de réalisation de l'invention, le dispositif de commande et d'alimentation électrique comprend une manette de commande reliée à l'unité de commande et configurée pour permettre à un opérateur de commander manuellement les mécanismes d'entraînement en rotation.

De toute façon l'invention sera bien comprise à l'aide de la description qui suit en référence au dessin schématique annexé représentant, à titre d'exemple non limitatif, une forme d'exécution de ce dispositif d'inspection.
Figures 1 et 2 sont des vues partielles respectivement en perspective et en coupe d'un générateur de vapeur équipé d'un dispositif d'inspection selon l'invention ;
Figure 3 est une vue en perspective du dispositif d'inspection de la figure 1 ;
Figure 4 est une vue de dessous du dispositif d'inspection de la figure 1;
Figure 5 est une vue de côté du dispositif d'inspection de la figure 1 ;
Figure 6 est une vue partielle de dessus du dispositif d'inspection de la figure 1 ;
Figure 7 est une vue en coupe transversale du dispositif d'inspection selon un plan de coupe passant par l'une des roues motrices du dispositif d'inspection.

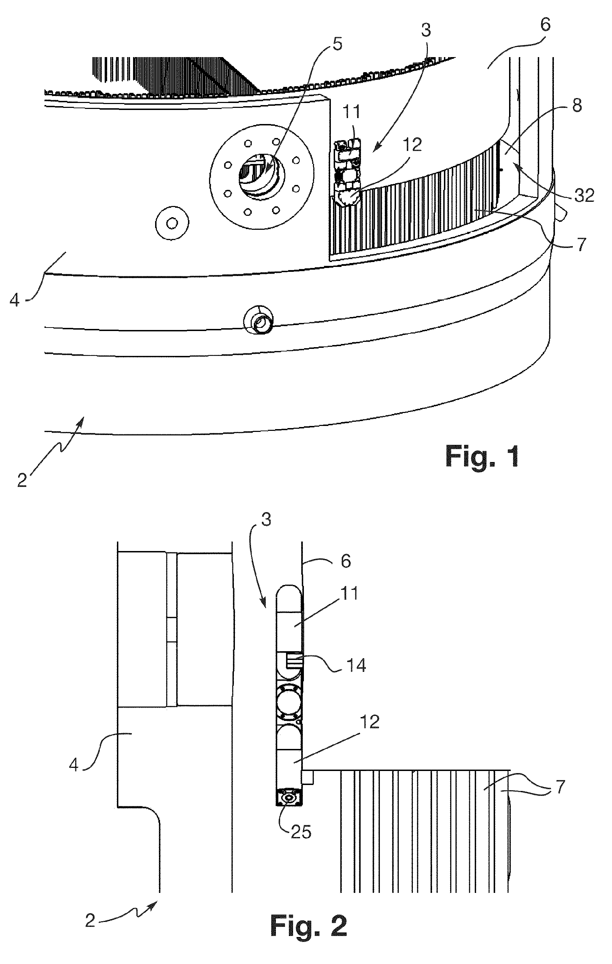

La figure 1 représente partiellement l'intérieur d'un générateur de vapeur 2 d'une centrale nucléaire qui est équipé d'un dispositif d'inspection 3 selon l'invention. Un tel générateur de vapeur 2 comporte de façon connue une enceinte métallique et globalement cylindrique formée par une enveloppe externe 4 métallique et munie, en partie basse, d'ouvertures 5 de diamètre inférieur à 40 cm, dites trous de poing. L'enveloppe externe 4 peut par exemple comporter deux ouvertures 5 diamétralement opposées, ou encore quatre ouvertures 5 décalées les unes des autres de 90°. Le générateur de vapeur 2 comporte en outre une enveloppe interne 6 cylindrique et métallique, et un faisceau de tubes d'écoulement 7 disposés dans le volume délimité par l'enveloppe interne 6 et présentant une forme générale de U inversé. Le générateur de vapeur 2 comporte également une plaque de support 8 sur laquelle sont fixées les portions d'extrémité des tubes d'écoulement 7.

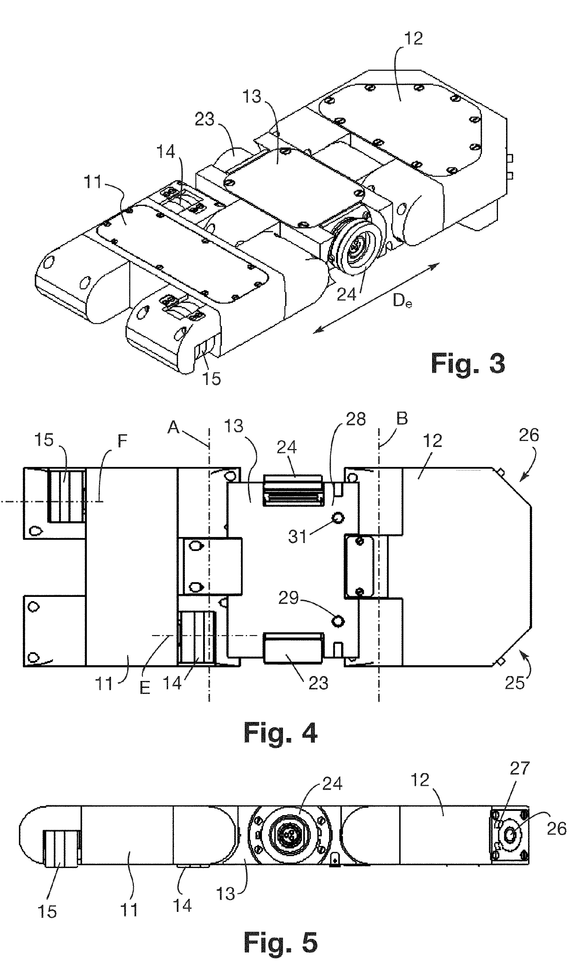

Comme montré plus particulièrement sur la figure 3, le dispositif d'inspection 3 se présente sous la forme d'un chariot allongé s'étendant selon une direction d'extension De, et comporte une partie de transport 11, une partie d'inspection 12 et une partie de liaison 13 disposée entre la partie de transport 11 et la partie d'inspection 12 et destinée à être reliée à un dispositif de commande et d'alimentation électrique (non représenté sur les figures). Selon le mode de réalisation représenté sur les figures, la partie de liaison 13 est montée pivotante sur la partie de transport 11 autour d'un premier axe de pivotement A s'étendant perpendiculairement à la direction d'extension De du dispositif d'inspection 3, et la partie d'inspection 12 est montée pivotante sur la partie de liaison 13 autour d'un deuxième axe de pivotement B s'étendant perpendiculairement à la direction d'extension De du dispositif d'inspection 3.

Le dispositif d'inspection 3 comporte en outre deux roues motrices 14, 15 montées sur la partie de transport 11 et conformées pour rouler sur l'enveloppe interne 6 du générateur de vapeur 2. Les deux roues motrices 14, 15 présentent respectivement des axes de rotation E, F s'étendant parallèlement à la direction d'extension De et décalés l'un par rapport à l'autre.

Les deux roues motrices 14, 15 sont avantageusement motorisées indépendamment l'une de l'autre. Selon le mode de réalisation représenté sur les figures, le dispositif d'inspection 3 comporte deux mécanismes d'entraînement en rotation montés sur la partie de transport 11 et configurés pour entraîner en rotation respectivement les deux roues motrices 14, 15. Ces deux mécanismes d'entraînement en rotation comportent par exemple deux moteurs d'entraînement 16, 17 couplés en rotation respectivement aux deux roues motrices 14, 15.

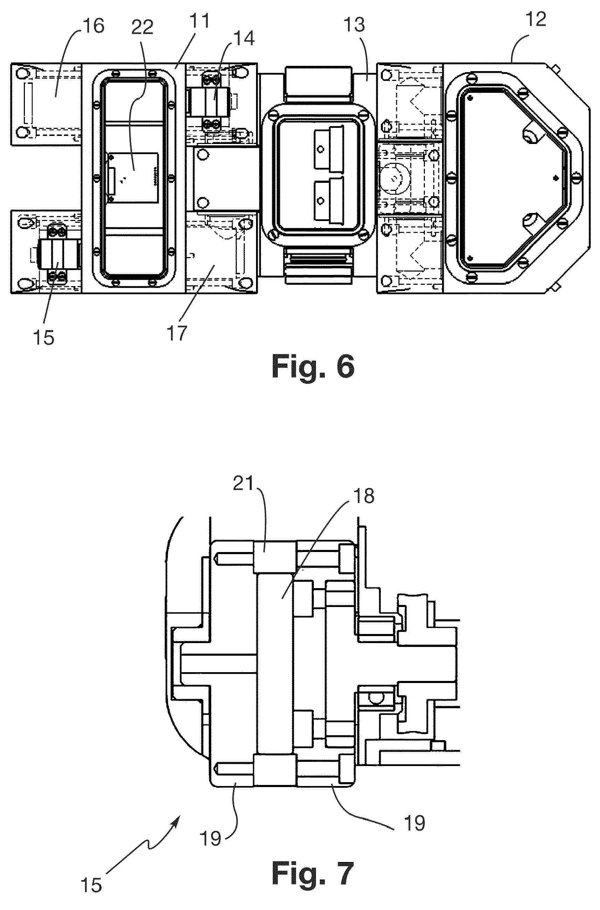

Chacune des roues motrices 14, 15 est avantageusement équipée d'un ou de plusieurs éléments en aimant permanent 18 configurés pour coopérer par aimantation avec l'enveloppe interne 6 lors des déplacements du dispositif d'inspection 3 sur l'enveloppe interne 6. Une telle configuration du dispositif d'inspection 3 permet de maintenir aisément les roues motrices 14, 15 de la partie de transport 11 en contact avec l'enveloppe interne 6 lors des déplacements du dispositif d'inspection 3. Selon le mode de réalisation représenté sur les figures (voir plus particulièrement la figure 7), chacune des roues motrices 14, 15 comporte un élément en aimant permanent 18, deux éléments magnétiques 19, par exemple en acier inoxydable, disposés latéralement de part et d'autre de l'élément en aimant permanent 18 respectif, et un élément amagnétique 21, par exemple en aluminium, s'étendant sur le pourtour de l'élément en aimant permanent 18 respectif et destiné à venir en appui contre l'enveloppe interne 6.

Afin de contrôler précisément le positionnement du dispositif d'inspection 3, le dispositif d'inspection 3, et plus particulièrement la partie de transport 11, peut comporter au moins un inclinomètre 22 configuré pour contrôler la verticalité du dispositif d'inspection 3 lors de ses déplacements sur l'enveloppe interne 6.

La partie de liaison 13 comporte deux éléments de connexion 23, 24 opposés l'un par rapport à l'autre, et disposés respectivement sur les deux bords longitudinaux du dispositif d'inspection 3. La partie de liaison 13 comporte également un câble d'alimentation électrique et de commande flexible (non visible sur les figures) configuré pour être connecté à l'un des éléments de connexion 23, 24 en fonction du sens de déplacement du dispositif d'inspection 3 sélectionné, et destiné à être relié au dispositif de commande et d'alimentation électrique.

Comme montré sur les figures 2 et 5, la partie d'inspection 12 comporte deux caméras d'inspection 25, 26 disposées de part et d'autre d'un plan longitudinal médian du dispositif d'inspection 3, et par exemple sensiblement de manière symétrique par rapport à ce plan longitudinal médian.

Selon un mode de réalisation de l'invention, chaque caméra d'inspection 25, 26 comporte un capteur optique ayant un axe optique orienté d'un angle compris entre 35 et 55°, et par exemple d'environ 45°, par rapport à la direction d'extension De du dispositif d'inspection 3. Selon un autre mode de réalisation de l'invention, chaque caméra d'inspection 25, 26 est orientable, et le dispositif d'inspection 3 comporte un système de contrôle configuré pour contrôler indépendamment l'orientation des caméras d'inspection 25, 26.

Avantageusement, la partie d'inspection 12 comporte deux systèmes d'éclairage 27 associés chacun à une caméra d'inspection 25, 26 respective. Chaque système d'éclairage 27 peut comprendre, par exemple, des diodes électroluminescentes disposées sur la périphérie de la caméra d'inspection respective.

La partie d'inspection 12 comporte en outre une portion de détection 28 équipée de deux éléments de détection 29, 31, tels que des capteurs inductifs ou capacitifs, configurés pour détecter, en conditions d'utilisation, la présence de l'enveloppe interne 6 en regard de la portion de détection 28. Les deux éléments de détection 29, 31 sont avantageusement alignés selon une direction d'alignement sensiblement perpendiculaire à la direction d'extension De du dispositif d'inspection 3. Selon un mode de réalisation de l'invention, les éléments de détection 29, 31 pourraient être configurés pour détecter, en conditions d'utilisation, un contact entre la portion de détection 28 et l'enveloppe interne 6.

Selon un mode de réalisation de l'invention, le câble d'alimentation électrique et de commande peut être configuré pour alimenter pneumatiquement le dispositif d'inspection 3 de manière à mettre en surpression l'espace intérieur de ce dernier, et notamment l'espace intérieur de la partie d'inspection 12. Ces dispositions permettent d'éviter, lors de l'utilisation du dispositif d'inspection 3, de polluer l'espace intérieur du dispositif d'inspection 3 avec un fluide présent dans le générateur de vapeur 2. Des orifices de fuite peuvent éventuellement être prévus à proximité des caméras d'inspection 25, 26 équipant la partie d'inspection 12 afin de protéger leur objectif par un jet d'air.

Selon un mode de réalisation de l'invention, le dispositif de commande et d'alimentation électrique comprend une unité de commande configurée pour commander les mécanismes d'entraînement en rotation selon un mode de fonctionnement automatique et un mode de fonctionnement manuel. Avantageusement, l'unité de commande est configurée pour interdire une commande des mécanismes d'entraînement en rotation selon le mode de fonctionnement automatique lorsque la présence de l'enveloppe interne 6 en regard de la portion de détection 28 n'est détectée par aucun des éléments de détection 29, 31. Dans le cadre d'une commande des mécanismes d'entraînement en rotation selon le mode de fonctionnement manuel, une telle commande peut par exemple être commandée par un opérateur à l'aide d'une manette de commande reliée à l'unité de commande du dispositif de commande et d'alimentation électrique.

Un procédé d'inspection d'un générateur de vapeur 2 d'une centrale nucléaire à l'aide d'un dispositif d'inspection 3 selon l'invention va maintenant être décrit. Un tel procédé comprend les étapes suivantes consistant à :
- connecter le câble d'alimentation électrique et de commande de la partie de liaison 13 au dispositif de commande et d'alimentation électrique,
- introduire le dispositif d'inspection 3 dans l'enceinte du générateur de vapeur 2 à partir d'une des deux ouvertures 5 prévues sur l'enveloppe externe 4,
- positionner les roues motrices 14, 15 de la partie de transport11 sur la surface externe de l'enveloppe interne 6 de telle sorte que la direction d'extension De du dispositif d'inspection 3 soit sensiblement verticale, le dispositif d'inspection 3 étant alors maintenu au contact de l'enveloppe interne 6 par l'intermédiaire des éléments en aimant permanent 18 disposés sur les roues motrices 14, 15,
- déplacer le dispositif d'inspection 3 dans une partie inférieure de l'enveloppe interne 6 et sur au moins une portion du pourtour de l'enveloppe interne 6, et
- réaliser une inspection de la plaque de support 8, et plus particulièrement d'un ru d'eau périphérique 32 délimité par la plaque de support 8, l'enveloppe externe 4 et les portions d'extrémité des tubes d'écoulement 7 disposés en périphérie du faisceau de tubes d'écoulement, au moyen des caméras d'inspection 25, 26 du dispositif d'inspection 3.

Selon une variante de mise en oeuvre du procédé d'inspection, ce dernier comprend en outre une étape consistant à nettoyer la plaque de support 8 au moyen d'un dispositif de nettoyage (non représenté sur les figures), et l'étape d'inspection de la plaque de support 8 comprend une étape consistant à réaliser, lors de l'étape de nettoyage de la plaque de support 8, une inspection du ru d'eau périphérique 32 au moyen des caméras d'inspection 25, 26 du dispositif d'inspection 3.

L'étape de nettoyage de la plaque de support 8 peut par exemple être stoppée lorsque le fluide de nettoyage utilisé lors de l'étape de nettoyage et s'écoulant dans le ru d'eau périphérique 32 est dépourvu d'impuretés ou sensiblement dépourvu d'impuretés.

Comme il va de soi, l'invention ne se limite pas à la seule forme d'exécution de ce dispositif d'inspection, décrite ci-dessus à titre d'exemple, elle en embrasse au contraire toutes les variantes de réalisation, elle pourra notamment utiliser un moyen de maintien alternatif à l'aimantation.

## Revendications

1. Procédé d'inspection d'un générateur de vapeur (2) comprenant une enveloppe externe (4), une enveloppe interne (6), un faisceau de tubes d'écoulement (7) disposé dans un volume interne délimité par l'enveloppe interne (6) et une plaque de support (8) sur laquelle sont fixées des portions d'extrémité des tubes d'écoulement (7), le procédé d'inspection comprenant les étapes suivantes consistant à :
- fournir un dispositif d'inspection (3) s'étendant selon une direction d'extension (De) et comprenant :
- une partie de transport (11) comprenant des moyens de roulement configurés pour rouler sur l'enveloppe interne (6), et des moyens de maintien configurés pour maintenir les moyens de roulement en contact avec l'enveloppe interne (6) lors des déplacements du dispositif d'inspection (3) sur l'enveloppe interne (6), et
- une partie d'inspection (12) comportant au moins une caméra d'inspection (25, 26) et une portion de détection (28) équipée d'au moins un élément de détection (29, 31), la partie d'inspection (12) étant montée pivotante par rapport à la partie de transport (11) autour d'au moins un axe de pivotement (A, B) s'étendant transversalement à la direction d'extension (De),
- positionner la partie de transport (11) du dispositif d'inspection sur une surface externe de l'enveloppe interne (6),
- déplacer le dispositif d'inspection (3) sur au moins une portion du pourtour de l'enveloppe interne (6), et
- réaliser une inspection de la plaque de support (8) au moyen de l'au moins une caméra d'inspection (25, 26),
- détecter, au moyen de l'au moins un élément de détection (29, 31), la présence de l'enveloppe interne (6) à proximité de la portion de détection (28), et
- avertir un opérateur lorsque la présence de l'enveloppe interne (6) n'est pas détectée lors de l'étape de détection.

2. Procédé d'inspection selon la revendication 1, lequel comprend une étape consistant à nettoyer la plaque de support (8), par exemple au moyen d'un dispositif de nettoyage pourvu d'une lance de nettoyage.

3. Procédé d'inspection selon la revendication 1 ou 2, dans lequel l'étape d'inspection de la plaque de support (8) comprend une étape consistant à inspecter un ru d'eau périphérique (32), délimité par la plaque de support (8), l'enveloppe externe (4) et les portions d'extrémité des tubes d'écoulement (7) disposés en périphérie du faisceau de tubes d'écoulement.

4. Procédé d'inspection selon la revendication 3, dans lequel l'étape d'inspection du ru d'eau périphérique (32) est réalisée lors de l'étape de nettoyage de la plaque de support (8).

5. Procédé d'inspection selon l'une quelconque des revendications 1 à 4, dans lequel l'étape de positionnement consiste à positionner la partie de transport (11) du dispositif d'inspection (3) sur la surface externe de l'enveloppe interne (6) de telle sorte que la direction d'extension (De) du dispositif d'inspection (3) soit sensiblement verticale.

6. Procédé d'inspection selon l'une quelconque des revendications 1 à 5, dans lequel l'étape de déplacement consiste à déplacer le dispositif d'inspection (3) dans une partie inférieure de l'enveloppe interne (6) et sur au moins une portion du pourtour de l'enveloppe interne (6).

7. Dispositif d'inspection (3) d'un générateur de vapeur (2), adapté pour la mise en oeuvre d'un procédé d'inspection selon l'une quelconque des revendications 1 à 6, le dispositif d'inspection (3) s'étendant selon une direction d'extension (De) et comportant :
- une partie de transport (11) comprenant des moyens de roulement configurés pour rouler sur une enveloppe interne (6) du générateur de vapeur, et des moyens de maintien configurés pour maintenir les moyens de roulement en contact avec l'enveloppe interne lors des déplacements du dispositif d'inspection (3) sur l'enveloppe interne (6), et
- une partie d'inspection (12) comportant au moins une caméra d'inspection (25, 26) et une portion de détection (28) équipée d'au moins un élément de détection (29, 31) configuré pour détecter, en conditions d'utilisation, la présence de l'enveloppe interne (6) à proximité de la portion de détection (28), la partie d'inspection (12) étant montée pivotante par rapport à la partie de transport (11) autour d'au moins un axe de pivotement (A, B) s'étendant transversalement à la direction d'extension (De).

8. Dispositif d'inspection (3) selon la revendication 7, lequel comprend en outre une partie de liaison (13) destinée à être reliée à un dispositif de commande et d'alimentation électrique.

9. Dispositif d'inspection (3) selon la revendication 8, dans lequel la partie de liaison (13) est disposée entre la partie de transport (11) et la partie d'inspection (12).

10. Dispositif d'inspection (3) selon la revendication 8 ou 9, dans lequel la partie de liaison (13) est montée pivotante sur la partie de transport (11) autour d'un premier axe de pivotement (A) s'étendant transversalement à la direction d'extension (De) du dispositif d'inspection, et la partie d'inspection (12) est montée pivotante sur la partie de liaison (13) autour d'un deuxième axe de pivotement (B) s'étendant transversalement à la direction d'extension (De) du dispositif d'inspection.

11. Dispositif d'inspection (3) selon l'une quelconque des revendications 7 à 10, dans lequel les moyens de maintien comportent des éléments magnétiques (18), tels que des éléments en aimant permanent, configurés pour coopérer par aimantation avec l'enveloppe interne (6).

12. Dispositif d'inspection (3) selon l'une quelconque des revendications 7 à 11, dans lequel les moyens de roulement comportent au moins deux roues motrices (14, 15) montées sur la partie de transport (11) et d'axes de rotation (E, F) sensiblement parallèles et décalés l'un par rapport à l'autre.

13. Dispositif d'inspection (3) selon l'une quelconque des revendications 7 à 12, lequel comporte des moyens de contrôle configurés pour contrôler le positionnement du dispositif d'inspection (3).

14. Dispositif d'inspection (3) selon la revendication 13, dans lequel les moyens de contrôle comportent au moins un inclinomètre (22) configuré pour contrôler la verticalité du dispositif d'inspection (3) lors de ses déplacements sur l'enveloppe interne.

15. Dispositif d'inspection (3) selon l'une quelconque des revendications 7 à 14, dans lequel l'au moins une caméra d'inspection (25, 26) est orientable, et le dispositif d'inspection (3) comporte un système de contrôle configuré pour contrôler l'orientation de l'au moins une caméra d'inspection (25, 26).
